# EUROPEAN PATENT APPLICATION

(11) **EP 3 842 472 A1**
(43) Date of publication of application: **30.06.2021**
(21) Application number: 19219204.5
(22) Date of filing: 23.12.2019
(51) Int. Cl.: C08G 69/28

(54) **PROCESS FOR PRODUCING A CONCENTRATED AQUEOUS SOLUTION OF A SALT OF A DIAMINE AND DICARBOXYLIC ACID**

(71) Applicant: POLYTECHNYL S.A.S., 75009 Paris (FR)
(72) Inventor: TERNISIEN, Thomas, 69001 Lyon (FR); THIERRY, Jean-François, 69340 Francheville (FR)
(74) Representative: Chatelan, Florence Anne

(57) **Abstract**

The present invention relates to a process for producing a highly concentrated aqueous solution of a salt of a diamine and dicarboxylic acid by using a pre-salt aqueous solution having a high concentration of diacid/diamine salt. The final diacid/diamine salt solution obtained is suitable for the manufacture of a polyamide such as for example polyamide 66.

## Description

### TECHNICAL FIELD

The present invention relates to a process for producing an aqueous solution of a salt of alkane diamine and alkanedicarboxylic acid and use thereof for the manufacturing of a polyamide. Furthermore, the present invention refers to a pre-salt aqueous solution having a high concentration of diacid/diamine salt, which is suitable for the production of the aqueous solution of a salt of a diamine and dicarboxylic acid of the invention.

In particular, the invention relates to a process for the manufacture of a concentrated solution of adipate hexamethylenediammonium salt, also called nylon salt, used as a raw material for the manufacture of polyamide (PA), more specifically PA66.

### TECHNICAL BACKGROUND

In industrial processes for the production of a polyamide from a dicarboxylic acid and a diamine, commonly, the starting material is an aqueous solution of a salt of alkanedicarboxylic acid and alkane diamine. This solution has generally a concentration of salt in a range from 50% to 70% by weight.

Besides, the maximum admissible concentration of salt, particularly nylon salt, in order to avoid problems of precipitation or crystallization at atmospheric pressure is in the order of 70% by weight based on the total weight of the dissolved species in the salt solution. Beyond this concentration, it is necessary to heat the solution at temperatures between 110 and 170°C, under a pressure above atmospheric pressure, to prevent precipitation or crystallization. These temperature and pressure domains are not easily compatible with storage and transportation of the aqueous salt solution before it is used in the production of polyamides.

However, in order to obtain the desired polyamides by polymerization via a condensation mechanism, commonly it is necessary to remove the excess of water present in the aqueous diacid/diamine salt solution.

The removal of the water may be done by evaporation as for example described in U.S. Patent No. 4,442,260. According to US 4,442,260 the concentration of the alkanedicarboxylic acid and alkane diamine in the aqueous solution before evaporation is between 43.2 and 57.1 wt.-%, based on the sum of the weight of said salt and water present in the pre-salt aqueous solution.

After the evaporation of water in excess, the final salt solution of US 4,442,260 has a salt concentration in a range from 89% to 96% by weight based on the total weight of the solute in the pre-salt aqueous solution. In a subsequent step, hexamethylenediamine is added in the concentrated solution until the hexamethylenediamine and adipic acid are in about stoichiometric proportions

However, this process encompassed inter alia the disadvantage that substantial amounts of energy have to be consumed to remove the water.

Furthermore, in general the aqueous diacid/diamine salt solution used for the production of a polyamide contains substantially stoichiometric amounts of dicarboxylic acids and diamines in order to achieve a polymer with high enough molecular weight and end group concentrations meeting specification for special applications such as textile yarn. The control of stoichiometric ratio between dicarboxylic acid and diamine is generally done by measuring the pH of the diacid/diamine salt solution. However, it is well known by the person skilled in the art that this pH measurement cannot be performed in a reliable and accurate manner if temperature and concentration are too high. This explains why the ratio of diacid and diamine is generally adjusted during the manufacture of the diacid/diamine salt solution and not during subsequent steps of the process. On the other hand, the evaporation has the disadvantage that a part of the diamine is entrained in the steam coming from the vaporization of water, in particular when the process is conducted at high temperature to achieve higher range of final salt concentration. This may lead to poor control of carboxylic and amine end group concentrations in polymer obtained from polymerization of resulting salt.

Therefore, several processes for manufacturing diacid/diamine concentrated salt solutions have been proposed in order to overcome the above-mentioned difficulties.

US Pat. No. 4,213,884 describes a process for the manufacture of an aqueous solution of salt of diamine and dicarboxylic acid having a final salt concentration of 70 to 90 wt.-%. In a first step of this process, an excess of dicarboxylic acid is mixed with diamine or salt solution to obtain a pre-salt solution containing an excess of dicarboxylic acid, at a salt concentration of 40 to 65 wt.-% based on sum of salt and water present in the pre-salt solution. Furthermore, in a second process step, neutralization step, a further amount of diamine is added to the solution in order to balance the molar ratio of dicarboxylic acid and diamine present in the final salt solution, with no mention of any specific control of the stoichiometric ratio.

WO 2008/148647 describes a process for the manufacturing of a diacid/diamine salt solution having a salt concentration of 50 to 80 wt.-% based on the total weight of the dissolved species in the pre-salt solution. The pre-salt aqueous solution of this process contains an excess of dicarboxylic acid and has a salt concentration of 12 to 59 wt.-%, based on the sum of the salt and water present in the pre-salt solution.

Hence, there is still the need to provide a process for the manufacture of an aqueous diacid/diamine salt solution suitable for the production of polyamides, which can be carried out in a simple and economical way and which provides a highly concentrated, easy to handle aqueous diacid/diamine salt solution, and wherein the stoichiometric ratio of the aqueous diacid/diamine salt solution can be controlled in a proper and accurate way by measuring the pH value of the solution.

### SUMMARY OF THE INVENTION

The inventors of the present invention have found that the above-mentioned problems of the prior art can be overcome in case as starting material for the preparation of the highly concentrated aqueous diacid/diamine salt solution a highly concentrated pre-salt solution is used.

Therefore, the invention relates to a process for the manufacture of an aqueous solution of a salt of an alkanedicarboxylic acid of 6 to 12 carbon atoms and an alkane diamine of 6 to 12 carbon atoms comprising process steps (a) and (b).

In process step (a) of the invention an alkanedicarboxylic acid of 6 to 12 carbon atoms and an alkane diamine of 6 to 12 carbon atoms are mixed to prepare a pre-salt aqueous solution having a molar ratio of alkanedicarboxylic acid to alkane diamine of 1.5 or higher.

The such obtained pre-salt aqueous salt solution contains
(i) more than 65 wt.-% and up to 85 wt.-% of the salt of alkanedicarboxylic acid and alkane diamine, based on the sum of the weight of said salt and water present in the pre-salt aqueous solution,
(ii) 75 wt.-% to 93 wt.-% of dissolved species, based on the total weight of the pre-salt aqueous solution, and
(iii) free alkanedicarboxylic acid.

This pre-salt aqueous solution can be stored under moderate temperature and pressure conditions. Additionally, due to the low content of water present in this solution there is no need to concentrate the pre-salt aqueous solution, for example by evaporation, to produce the final aqueous solution of a salt of an alkanedicarboxylic acid of 6 to 12 carbon atoms and an alkane diamine of 6 to 12 carbon atoms according to the invention.

In the subsequent process step, process step (b), of the invention, a sufficient additional amount of alkane diamine of 6 to 12 carbon atoms is added to the pre-salt aqueous solution obtained in process step (a) to produce the final diacid/diamine salt solution having a molar ratio of alkanedicarboxylic acid to alkane diamine of from 0.9 to 1.1, preferably close to 1.

The obtained final aqueous solution has a diacid/diamine salt concentration of 80 to 95% by weight based on the total weight of the dissolved species in the salt solution.

Additionally, the invention refers to a pre-salt solution as defined above and used in the process of the invention.

Furthermore, the present invention refers to a process for the manufacture of a polyamide AABB, wherein AA is an alkanedicarboxylic acid of 6 to 12 carbon atoms, preferably adipic acid, and BB is an alkane diamine of 6 to 12 carbon atoms, preferably hexamethylenediamine, and wherein at first an aqueous diacid/diamine salt solution is produced according to the present invention and afterwards a polycondensation reaction of the obtained aqueous salt solution is carried out.

### DETAILED DESCRIPTION OF THE INVENTION

Before the present processes of the invention are described, it has to be understood that the terminology used herein is not intended to be limiting, since the scope of the present invention will be limited only by the appended claims.

As used herein, the singular forms "a", "an", and "the" include both singular and plural referents unless the context clearly dictates otherwise. By way of example, "an alkanedicarboxylic acid" means one alkanedicarboxylic acid or more than one alkanedicarboxylic acid.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of', "consists" and "consists of".

Throughout this application, the term "about" is used to indicate that a value includes the standard deviation of error for the device or method being employed to determine the value.

As used herein, the terms "% by weight", "wt.- %", "weight percentage", or "percentage by weight" are used interchangeably.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

As used herein, the terms "alkanedicarboxylic acid", "dicarboxylic acid" or "diacid" are interchangeably.

As used herein, the terms "alkane diamine" or "diamine" are interchangeably.

As used herein, the term "pre-salt" is used to indicate a composition comprising an alkane dicarboxylic acid and an alkane diamine, in which the dicarboxylic acid is in molar excess with respect to the alkane diamine (molar ratio of alkanedicarboxylic acid to alkane diamine equal to or greater than 1.5).

As used herein, the terms "nylon salt", "salt" or "diacid/diamine salt" are used to indicate a composition comprising an alkane dicarboxylic acid and an alkane diamine in substantially stoichiometric proportions (molar ratio of alkanedicarboxylic acid to alkane diamine comprised between 0.9 and 1.1).

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different alternatives, embodiments and variants of the invention are defined in more detail. Each alternative and embodiment so defined may be combined with any other alternative and embodiment, and this for each variant unless clearly indicated to the contrary or clearly incompatible when the value range of a same parameter is disjoined. In particular, any feature indicated as being preferred or advantageous may be combined with any other feature or features indicated as being preferred or advantageous.

Furthermore, the particular features, structures or characteristics described in present description may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art.

As mentioned above, the present invention refers to a process for the manufacture of an aqueous solution of a salt of an alkanedicarboxylic acid of 6 to 12 carbon atoms and an alkane diamine of 6 to 12 carbon atoms, comprising the following process steps:
(a) mixing an alkanedicarboxylic acid of 6 to 12 carbon atoms with an alkane diamine of 6 to 12 carbon atoms to prepare a pre-salt aqueous solution having a molar ratio of alkanedicarboxylic acid to alkane diamine of 1.5 or higher and containing
   i. more than 65 wt.-% and up to 85 wt.-% of the salt of alkanedicarboxylic acid and alkane diamine, based on the sum of the weight of said salt and water present in the pre-salt aqueous solution,
   ii. 75 wt.-% to 93 wt.-% of dissolved species, based on the total weight of the pre-salt aqueous solution, and
   iii. free alkanedicarboxylic acid;
   and
(b) adding a sufficient amount of an alkane diamine of 6 to 12 carbon atoms to the pre-salt aqueous solution obtained in process step (a) to obtain the final aqueous diacid/diamine salt solution having a molar ratio of alkanedicarboxylic acid to alkane diamine of from 0.9 to 1.1, preferably close to 1.

The such produced final aqueous diacid/diamine salt solution of the invention preferably has a diacid/diamine salt concentration of 80 wt.-% or greater, preferably of 85 wt.-% or greater, based on the total weight of the dissolved species in the salt solution. In a preferred embodiment of the invention, the final aqueous diacid/diamine salt solution has a salt concentration in a range from 80 up to 95 wt.-%, based on the total weight of the dissolved species in the salt solution.

According to the invention, in process step (a) an alkanedicarboxylic acid of 6 to 12 carbon atoms is mixed with an alkane diamine of 6 to 12 carbon atoms to prepare a pre-salt aqueous solution having a molar ratio of alkanedicarboxylic acid to alkane diamine of 1.5 or higher. Furthermore, the pre-salt aqueous solution contains
i. more than 65 wt.-% and up to 85 wt.-% of the salt of alkanedicarboxylic acid and alkane diamine, based on the sum of the weight of said salt and water present in the pre-salt aqueous solution,
ii. 75 wt.-% to 93 wt.-% of dissolved species, based on the total weight of the pre-salt aqueous solution, and
iii. free alkanedicarboxylic acid.

The alkanedicarboxylic acid used in the invention has 6 to 12 carbon atoms, preferably 6 to 10 carbon atoms, more preferably 6 to 8 carbon atoms, even more preferably equal to 6. The alkanedicarboxylic acid may be a linear, branched, cycloalkane or heterocycloalkane dicarboxylic acid. More preferably, the alkanedicarboxylic acid is selected from the group consisting of adipic acid, suberic acid, sebacic acid, dodecanedioic acid, azelaic acid, pimelic acid, or mixtures thereof. According to the invention, adipic acid is the preferred and most used monomer.

Furthermore, in the process of the invention, the alkanedicarboxylic acid may be used in powder form or as a suspension by mixing adipic acid with diamine stream and/or demineralized water stream or mixtures thereof. Its use in powder form is particularly preferred.

The diamine of the invention has 6 to 12 carbon atoms, preferably 6 to 10 carbon atoms, more preferably 6 to 8 carbon atoms, even more preferably equal to 6. The alkane diamine may be a linear, branched, cycloalkane or heterocycloalkane diamine. Examples for heterocycloalkane diamines are m-xylylenediamine or p-xylylenediamine. It is even more preferred that the diamine is selected from the group consisting of hexamethylenediamine (HMD), heptamethylenediamine, tetramethylenediamine, octamethylenediamine, nonamethylenediamine, decamethylenediamine, 2-methyl-pentamethylenediamine, undecamethylenediamine, dodecamethylenediamine, isophoronediamine, or mixtures thereof. In a most preferred embodiment of the invention, the diamine is hexamethylenediamine (HMD).

It is further preferred that the diamines of the pre-salt aqueous solution obtained in process step (a) and the further diamine, which is added to the pre-salt aqueous solution in process step (b), are identical chemical compounds.

Additionally, in the process of the invention, the diamine(s) added at process step (a) is preferably used either in pure form or in the form of aqueous solution. For HMD, the solution preferably comprises at least 45% by weight of diamine, more preferably at least 55% by weight. However, the concentrated diamine aqueous solution may comprise other compounds and/or solvents. The diamine added in the process step (b) is preferably used in pure form.

In a most preferred embodiment of the invention the dicarboxylic acid is adipic acid and the alkane diamine is hexamethylenediamine.

According to the invention, in process step (a), a sufficient amount of the dicarboxylic acid as defined above, i.e. a molar excess of the diacid, is mixed with the diamine as defined above to obtain a pre-salt solution having a molar ratio of dicarboxylic acid to diamine of 1.5 or higher, preferably higher than 1.9, and preferably lower than 3.8. In a most preferred embodiment of the invention, the obtained pre-salt solution has a molar ratio of dicarboxylic acid to diamine of 2.5 to 3.5.

Furthermore, it is preferred that the pre-salt aqueous solution obtained in process step (a) of the invention is characterized in that the concentration of the diacid/diamine salt present in the pre-salt aqueous solution is ranging from 65 to 85 wt.-%, more preferably from 68 to 80 wt.-%, and even more preferably from 70 to 80 wt.-%, based on the sum of the weight of said salt and water present in the pre-salt aqueous solution.

Additionally, the pre-salt aqueous solution of the invention comprises dissolved species in an amount of from 75 wt.-% to 93 wt.-%, preferably from 75.5 to 92.5 wt.-%, more preferably from 80 to 90 wt.-%, based on the total weight of the pre-salt aqueous solution.

The term "dissolved species" is to be understood to mean all the diacid and diamine species present in the solution in unreacted form or as resulting species of the neutralization reaction of diacid and diamine to form a salt. Moreover, "dissolved species" may additionally mean that all the diacid and diamine species are soluble in the solution and lead to a homogeneous aqueous solution under operating conditions of temperature and pressure.

The term "solution" is to be understood to mean that the diacid and diamine species are dissolved in a solvent which essentially consists in demineralized water.

Furthermore, since in process step (a) of the invention the dicarboxylic acid and the diamine are not used in stoichiometrically equivalent quantities but the dicarboxylic acid is used in a molar excess, the obtained pre-salt aqueous solution comprises free alkanedicarboxylic acid.

The term "free alkanedicarboxylic acid" refers to the unreacted form of diacid, for example which does not form a salt with the diamine in the pre-salt aqueous solution.

The concentration of the free alkanedicarboxylic acid present in the pre-salt aqueous solution is preferably between 30 and 50 wt.-%, more preferably between 40 and 50 wt.-%, based on the total weight of the pre-salt aqueous solution.

The process step (a) of the invention, i.e. the preparation of the pre-salt aqueous salt solution of the invention, is preferably carried out at moderate temperatures, in particular at a temperature between 60 and 130 °C, more preferably between 60 and 110 °C, even more preferably between 70 and 90 °C.

Additionally, it is preferred that the pressure used in process step (a) of the invention is atmospheric pressure, or slightly higher than atmospheric pressure to avoid inlet of oxygen in process vessels. Advantageously the overpressure can be obtained by maintaining vessels under slight nitrogen pressure.

The temperature and pressure conditions in the process step (a) are preferably adjusted so as to keep a homogeneous aqueous solution, promote the dissolution of dicarboxylic acid and limit the water vapor partial pressure above the reaction mixture.

The such obtained pre-salt aqueous salt solution, i.e. the pre-salt aqueous solution as defined above, may be directly used in process step (b) of the invention. The pre-salt aqueous solution can be stored or transported before the solution is further used. The pre-salt aqueous solution of the invention can be stored for one or several days. Preferably, this storage period shall not be extended beyond a few weeks to avoid accumulation of precondensates within the pre-salt solution that could have a detrimental impact on subsequent step of the process. The term "stored" as used herein means that the pre-salt aqueous solution as produced in process step (a) of the claimed invention is waiting either in the reaction vessel or in a buffer tank, storage tank, or in any vessel suitable for pre-salt transportation, such as tank truck or tank wagon, under closed conditions at this stage.

According to the invention, the temperature during storage is from 60 to 130 °C, preferably from 60 to 110°C, even more preferably lies between 70 and 90 °C. The pressure during storage is atmospheric pressure or slightly higher than atmospheric pressure to avoid inlet of oxygen into process vessels. Advantageously the overpressure can be obtained by maintaining vessels under slight inert gas pressure, for example nitrogen pressure.

The temperature and pressure conditions in the process step (b) are preferably adjusted so as to keep a homogeneous aqueous solution, reduce the formation of oligomeric reaction products and limit the water vapor partial pressure above the stored solution.

In process step (b) of the invention, also called neutralization step, further amount of a diamine is added to the pre-salt aqueous solution obtained in process step (a) in order to obtain a final diacid/diamine salt solution having a molar ratio of dicarboxylic acid to diamine of from 0.9 to 1.1. Preferably, the molar ratio of dicarboxylic acid to diamine in the final aqueous salt solution is in the range from 0.98 to 1.02, more preferably in a range from 0.995 to 1.005, even more preferably in a range from 0.999 to 1.001.

According to the invention, by using the pre-salt aqueous solution of the invention in process step (b), there is no need for concentration of the solution before or during process step (b). The result of this is that the energy consumption of the process of the invention can be reduced, since no energy is needed to remove a part of the water present in the solution, for example by evaporation using a heat exchange equipment.

In process step (b) of the invention it is preferred that the solution including the pre-salt aqueous solution of process step (a) and the additional diamine is heated up to a final temperature lying between 150 and 180 °C, preferably between 150 and 170 °C, under a pressure of 0.25 to 0.55 MPa, preferably of 0.25 to 0.35 MPa. In a particular embodiment of the invention, the process step (b) is carried out under closed conditions, meaning that no significant quantity of gaseous compounds such as water or diamine vapors can leave the reaction vessel. Furthermore, it is preferred that all energy coming from the neutralization reaction enthalpy is used to heat the aqueous solution of process step (b), and thus little or no additional external heat supply is necessary.

According to the teaching of the invention, the process step (b) is controlled by measuring the pH value of the solution including the pre-salt aqueous solution of process step (a) and the additional diamine, hereinafter referred to as neutralization medium.

The term "controlled" means that the amount of diamine which is added to the pre-salt aqueous solution is adjusted in response to the pH measurement so as to achieve the required diacid/diamine molar ratio of the final salt solution according to the invention.

The accuracy of the pH measurement is impacted by temperature, and by concentration of the organic species contained in the aqueous solution. In order to achieve the desired accuracy in the reaction zone(s), the solution is diluted and cooled down prior to pH measurement.

The dilution method is applied to a little part of an external recirculation stream through the reactor, by injecting an adjusted side stream of demineralized water to achieve desired dilution ratio of the neutralization medium stream.

Finally, the diluted neutralization medium stream can be cooled down with the help of a heat exchanger, before pH measurement. Using this system both dilution ratio and temperature of the solution flowing through pH probe can be controlled, thus allowing accurate pH measurement in accordance with the range of molar ratio needed. For instance, dilution and temperature control can bring the solution to be analyzed at a concentration of 10 wt.-% and a temperature of 20°C.

The above described system for dilution, temperature control and pH measurement can be directly connected to the process reactor(s) used in the process step (b) of the invention, for continuous and/or discontinuous monitoring of the pH value and hence of molar ratio in the neutralization medium. This high performance monitoring is thus possible despite high concentration and temperature of the neutralization medium.

According to the invention, it is preferred that the pH value of the neutralization medium at the end of process step (b) is close to the equivalent point of the neutralized final aqueous salt solution. For example an adipic acid / HMD salt solution has a pH target in the range from 7.5 to 8, when measuring the pH in the solution at 10 wt.-% and 20 °C.

The manufacturing process of the aqueous diacid/diamine salt solution may be carried out in batch or continuous mode.

Furthermore, according to the invention, the process is carried out in reaction zones. Preferably, each reaction zone is contained in a separate reactor, namely the first reaction zone is contained in the first reactor; the second reaction zone is contained in the second reactor, etc. As a consequence, the process of the invention is preferably carried out in an installation comprising several reactors arranged in series, each reactor corresponding to the operation of one step of the process.

In one embodiment of the invention, one or more reaction zones can include several reactors each, working in parallel.

However, without departing from the context of the invention, the various steps of the process may be carried out successively in the same reactor. Similarly, the installation may comprise several reactors arranged in parallel, to carry out one step of the process.

Furthermore, it is preferred that in the first reaction zone the pre-salt aqueous solution of process step (a) is produced by feeding separately the streams of dicarboxylic acid, aqueous or pure diamine, and optionally water, into the reaction zone. In another embodiment, the dicarboxylic acid is fed into the first reaction zone which already contains water and/or diamine. Additional diamine and/or water may then be added simultaneously with the dicarboxylic acid.

The second process step (b) of the invention is preferably carried out in the second reaction zone by feeding a stream of diamine to the pre-salt aqueous solution obtained in step (a). In a preferred embodiment, the diamine stream is controlled and adjusted by means of an analytical platform used for measuring the pH of the solution. Part of the aqueous neutralization medium in circulation can be diverted to this platform equipped with specific apparatus to dilute neutralization medium stream with a side stream of water, and a heat exchanger, before conducting the pH measurement.

Furthermore, according to the invention, the stream(s) comprising the alkanedicarboxylic acid, diamine and/or water as reactants may comprise other compounds and/or solvents.

Furthermore, it is preferred that the process of the invention is carried out in the reaction zones under an oxygen-free atmosphere, by feeding an inert gas such as nitrogen so as to maintain and renew the inert reactor atmosphere during operation of the reactors. Advantageously, the reactors are equipped with thermal insulation in order to limit heat exchange with the environment and thus to limit heat losses.

The obtained aqueous diacid/diamine salt solution of the invention may be further used for the manufacture of a polyamide. For that purpose, the obtained aqueous diacid/diamine salt solution is fed to a polymerization reaction zone to manufacture a polyamide by polycondensation reaction. The polycondensation reaction can be carried out by any process known in the prior art.

According to the invention, the produced polyamide is a polyamide of AABB type, wherein AA is an alkanedicarboxylic acid of 6 to 12 carbon atoms and BB is an alkane diamine of 6 to 12 carbon atoms.

It is preferred that the produced polyamide is polyamide 66.

### EXAMPLES

### Comparative Example 1 (Benchmark process)

In order to produce 1000 kg of polyamide 66, in a first process step, 597 kg of water, 646 kg of adipic acid and 214 kg HMD were mixed to obtain a pre-salt solution.

Afterwards, in a neutralization step, approx. 300 kg of pure HMD at a temperature of 60°C to 65°C were added to the pre-salt solution under atmospheric pressure, with pH control to reach a target value of 7.85 as measured at 20°C on a fraction of the neutralization medium diluted at 10 wt.-%. The obtained aqueous diacid/diamine salt solution had a molar ratio of diacid to diamine of approx. 1.000 and a salt concentration of 66%, based on the sum of salt and water present in the solution.
Subsequently, the solution was evaporated at a pressure of 0.25 MPa and a temperature of 164°C and thus, 454 kg of water and approx. 1 kg of HMD was removed from the solution. The concentrated salt solution obtained had a diacid/diamine salt concentration of 89 wt.-%, based on the total weight of the solution.

This aqueous diacid/diamine salt solution was polymerized at a pressure of 0.1 to 1.85 MPa and at temperature up to 275°C to produce polyamide 66.

### Example 1 (Process according to the invention)

In order to produce 1000 kg of polyamide 66, in a first process step, 144 kg of water, 646 kg of adipic acid and 171 kg HMD were mixed under moderate process conditions, i.e. under atmospheric pressure and at a temperature of 75 to 80 °C, to obtain a pre-salt aqueous solution having a molar ratio of diacid to diamine of 3.0. The large excess of adipic acid in the reaction medium results in a better solubility of the pre-salt solution. The diacid/diamine salt concentration in the pre-salt aqueous solution thus obtained was 72.8%, based on the sum of salt and water present in the solution, and the concentration of dissolved species in the pre-salt was 85 wt.-%, based on the total weight of the pre-salt aqueous solution.

Afterwards, in a neutralization step, under closed conditions at a temperature of 164 to 170°C and a pressure of 0.25 to 0.30 MPa, approx. 343 kg of pure HMD were added to the pre-salt solution, with pH control to reach a target value of 7.85 as measured at 20°C on a fraction of the neutralization medium diluted at 10 wt.-%. In this process step, all energy obtained from the neutralization reaction was used to heat the solution and to obtain a high concentrated salt solution without the need of any evaporation of water. The obtained aqueous diacid/diamine salt solution had a molar ratio of diacid to diamine of approx. 1.000 and a diacid/diamine salt concentration of 89 wt.-%, based on the total weight of the solution.
This aqueous diacid/diamine salt solution was polymerized at a pressure of 0.1 to 1.85 MPa and at temperature up to 275°C to produce polyamide 66.

Comparison of the process of Comparative Example 1 and the process of Example 1 according to the invention demonstrates that by using a highly concentrated pre-salt solution a process for the manufacture of an aqueous diacid/diamine salt solution suitable for the production of polyamides is provided that can be carried out in a simple and economical way.

## Claims

1. Process for the manufacture of an aqueous solution of a salt of an alkanedicarboxylic acid of 6 to 12 carbon atoms and an alkane diamine of 6 to 12 carbon atoms comprising the following process steps:
(a) mixing an alkanedicarboxylic acid of 6 to 12 carbon atoms with an alkane diamine of 6 to 12 carbon atoms to prepare a pre-salt aqueous solution having a molar ratio of the alkanedicarboxylic acid to alkane diamine of 1.5 or higher and containing
i. more than 65 wt.-% and up to 85 wt.-% of the salt of alkanedicarboxylic acid and alkane diamine, based on the sum of the weight of said salt and water present in the pre-salt aqueous solution,
ii. 75 wt.-% to 93 wt.-% of dissolved species, based on the total weight of the pre-salt aqueous solution, and
iii. free alkanedicarboxylic acid;
and
(b) adding a sufficient amount of an alkane diamine of 6 to 12 carbon atoms to the pre-salt aqueous solution obtained in process step (a) to obtain the final aqueous solution of salt of alkanedicarboxylic acid and alkane diamine having a molar ratio of alkanedicarboxylic acid to alkane diamine of from 0.9 to 1.1.

2. The process of claim 1, wherein the concentration of free alkanedicarboxylic acid in the pre-salt aqueous solution of step (a) is from 30 to 50 wt.-%, based on the total weight of the pre-salt aqueous solution.

3. The process of claim 1 or 2, wherein the molar ratio of alkanedicarboxylic acid to alkane diamine in the pre-salt aqueous solution is higher than 1.9 and lower than 3.8.

4. The process of any one of the preceding claims, wherein process step (a) is carried out at a temperature between 60 and 130 °C.

5. The process of any one of the preceding claims, wherein, before and/or during process step (b), no concentration of the pre-salt aqueous solution and/or the solution containing the pre-salt aqueous solution and the additional diamine of process step (b) is carried out.

6. The process of any one of the preceding claims, wherein process step (b) is controlled by measuring the pH value of the solution containing the pre-salt aqueous solution and the additional diamine of process step (b).

7. The process of any one of the preceding claims, wherein process step (b) is carried out at a pressure of 0.25 to 0.55 MPa and a temperature of 150 to 180°C

8. The process of any one of the preceding claims, wherein the diamine used in process step (a) and the diamine used in process step (b) are identical chemical compounds.

9. The process of any one of the preceding claims, wherein the final aqueous salt solution contains the salt of the alkanedicarboxylic acid and alkane diamine is in an amount of more than 80 % wt.-% and up to 95 % wt.-%, based on the total weight of the dissolved species in the salt solution.

10. The process of any one of the preceding claims, wherein the alkanedicarboxylic acid is adipic acid, and the alkane diamine is hexamethylenediamine.

11. The process of any one of the preceding claims, wherein the pre-salt aqueous solution obtained in process step (a) is stored and/or transported before process step (b) is carried out.

12. A process for the manufacture of a polyamide of AABB type, wherein AA is an alkanedicarboxylic acid of 6 to 12 carbon atoms and BB is an alkane diamine of 6 to 12 carbon atoms, wherein
at first an aqueous solution of a salt of an alkanedicarboxylic acid and an alkane diamine is prepared according to the process of any one of claims 1 to 11 and afterwards a polycondensation reaction is carried out using the above aqueous solution as a starting material.

13. The process according to claim 12, wherein the produced polyamide is polyamide 66.

14. A pre-salt aqueous solution of an alkanedicarboxylic acid of 6 to 12 carbon atoms and an alkane diamine of 6 to 12 carbon atoms, wherein the pre-salt aqueous solution has a molar ratio of alkanedicarboxylic acid to alkane diamine of 1.5 or higher and contains
i. more than 65 wt.-% and up to 85 wt.-% of the salt of alkanedicarboxylic acid and alkane diamine, based on the sum of the weight of said salt and water present in the pre-salt aqueous solution,
ii. 75 wt.-% to 93 wt.-% of dissolved species, based on the total weight of the pre-salt aqueous solution, and
iii. free alkanedicarboxylic acid.

15. The use of the pre-salt aqueous solution according to claim 14 in a process for the manufacture of an aqueous solution of a salt of an alkanedicarboxylic acid of 6 to 12 carbon atoms and an alkane diamine of 6 to 12 carbon atoms having a molar ratio of alkanedicarboxylic acid to alkane diamine of from 0.9 to 1.1.
